# EUROPÄISCHE PATENTSCHRIFT

(11) **EP 0 892 670 B1**
(45) Veröffentlichungstag und Bekanntmachung des Hinweises auf die Patenterteilung: **07.08.2002**
(21) Anmeldenummer: 98902936.8
(22) Anmeldetag: 05.01.1998
(51) Int. Cl.: B01D 63/08

(54) **VORRICHTUNG ZUM FILTERN UND TRENNEN VON STRÖMUNGSMEDIEN**
DEVICE FOR FILTERING AND SEPARATING FLOWING FLUIDS
DISPOSITIF DE FILTRAGE ET DE SEPARATION DE FLUIDES EN MOUVEMENT

(30) Priorität: 07.01.1997 DE 19700231
(43) Veröffentlichungstag der Anmeldung: 27.01.1999
(73) Patentinhaber: GKSS-FORSCHUNGSZENTRUM GEESTHACHT GMBH, 21502 Geesthacht (DE)
(72) Erfinder: HILGENDORFF, Walter, D-21395 Tespe (DE); KAHN, Gerhard, D-21502 Geesthacht (DE); JORDT, Frauke, D-23879 Mölln (DE)
(74) Vertreter: Seemann, Ralph, Dr. Dipl.-Phys.
(86) Internationale Anmeldenummer: DE9800006
(87) Internationale Veröffentlichungsnummer: WO9830316

(56) Entgegenhaltungen:
- DE-A- 3 915 197
- DE-A- 4 012 972
- DE-A- 4 028 379
- DE-A- 4 416 729
- DE-C- 4 225 060

## Beschreibung

Die Erfindung betrifft eine Vorrichtung zum Filtern und Trennen von Strömungsmedien durch Pervaporation, Mikrofiltration, Ultrafiltration und Umkehrosmose, umfassend eine Eintrittsöffnung für das zu trennende Medium, sowie Austrittsöffnungen für das Retentat und das Permeat, sowie eine Mehrzahl von Abstandselementen zur Lenkung der Strömungsmedien, wobei jeweils zwischen zwei im wesentlichen scheibenförmigen, eine Trennkammer bildenden Abstandselementen, die vom Strömungsmedium umflossen werden, ein nach Art einer Membrantasche ausgebildetes Filterelement eingeschlossen ist, das vom Strömungsmedium beidseitig umflossen wird, und wobei wenigstens eine im Randbereich des Abstandselements ausgebildete Durchtrittsöffnung für das Strömungsmedium ausgebildet ist, und daß die Durchtrittsöffnung durch einen umlaufenden äußeren Begrenzungsrand und auch eine den Begrenzungsrand verbindende gedachte Sehne gebildet wird.

Eine Vorrichtung dieser Art ist bekannt (DE-A-39 15 197). Bei dieser bekannten Vorrichtung werden Abstandselemente gemäß der voraufgeführten Gattung verwendet, und zwar Abstandselemente, die an jeweils gegenüberliegenden Seiten Durchgangsöffnungen für das zu trennende Medium haben, oder Abstandselemente, die nur an einer Seite Durchgangsöffnungen aufweisen. Die bekannte Vorrichtung gestattet, durch wahlweise Verwendung entweder der einen Sorte von Abstandselementen mit zwei Durchgangsöffnungen oder der anderen Sorte mit jeweils nur einer Durchgangsöffnung, die Ausbildung meanderförmiger Strömungspfade durch den Stapel von Abstandselementen und zwischengefügten Filterelementen oder aber ein gleichzeitiges Überströmen aller Filterelemente mit dem zu trennenden Medium. Es sind also Serienschaltungen und Parallelschaltungen von Strömungspfaden des Strömungsmediums möglich, je nach gewünschter Anwendung. Das in das Filterelement in Form einer an sich bekannten Membrantasche eindringende Permeat wird auf bekannte Weise über ein regelmäßig im Filterelement ausgebildetes zentrales Loch auf bekannte Weise abgeführt und aus der Vorrichtung insgesamt herausgeleitet. Membrantaschen werden in der Fachwelt auch Membrankissen oder Kissenmembranen genannt. Membrantaschen, Membrankissen oder Kissenmembranen sind synonyme Begriffe.

Bei Vorrichtungen, die regelmäßig flach ausgebildete Filterelemente dieser Art verwenden, wird beobachtet, daß sich bei der überströmung des zu trennenden Mediums auf der Oberfläche des Filterelements Zonen mit unterschiedlichen Stoffübergangswerten bilden. Diese Erscheinung wird durch unterschiedliche Strömungsbedingungen hervorgerufen, die als wesentliche Ursache eine nicht optimal konstruktiv ausbildbare Struktur hat.

Dieses hat im wesentlichen seinen Grund darin, daß Vorrichtungen dieser Art aus Gründen der hohen Druckbeständigkeit und aus Gründen der einfachen und somit kostengünstigen Fertigungsweise regelmäßig einen annähernd kreisförmigen Durchmesser aufweisen, dem somit auch das eigentliche Filterelement in bezug auf seine äußeren Konturen unterworfen ist.

Es wurde beobachtet, daß in Bereichen von Filterelementen mit derartiger Struktur mit geringen Stoffübergangswerten, ausgedrückt in der sogenannten Re-Zahl, ein geringer Permeatfluß herrscht und in den Bereichen mit hoher Re-Zahl sich der Permeatfluß nicht im gleichen Maße erhöht, da sich in diesen Bereichen der Permeatfluß asymptotisch einem Endwert nähert. Grundsätzlich würde bei gleichen Eingangsbedingungen für das zu trennende Medium bei einer derartigen Vorrichtung, beispielsweise bezüglich des Förderstromes, des Druckes, der Temperatur und der Art des Mediums, eine gleiche Re-Zahl über die gesamte Oberfläche des Filterelements zu einer insgesamt höheren Permeatflußleistung führen. Andererseits steigt an den Stellen mit erhöhter Re-Zahl der Druckverlust exponentiell an, ohne daß dadurch der Permeatfluß wesentlich erhöht wird, wobei der erhöhte Druckverlust besonders im Endbereich einer derartigen Vorrichtung zu einer Reduzierung des Betriebsdruckes und somit zu einer Abnahme des Permeatflusses führt.

Grundsätzlich gelten diese Bedingungen auch bei einer Vorrichtung, wie sie gemäß der DE-B-37 15 183 bekannt ist, d.h. bei einer Vorrichtung, bei der das zu trennende Medium über das Filterelement, das zwischen zwei Abstandselementen jeweils eingeschlossen ist, von außen nach innen und im nachfolgenden Filterelement von innen nach außen und in gleicher Weise abwechselnd fortlaufend geführt wird.

Es ist somit Aufgabe der vorliegenden Erfindung, eine Vorrichtung der eingangs genannten Art zu schaffen, mit der der gesamte effektive Bereich der Filterelemente mit konstanter Geschwindigkeit des zu trennenden Mediums überströmt werden kann, die somit bei konstanter Kanalhöhe auch konstante Re-Zahlen über den gesamten effektiven Bereich der Filterelemente ermöglicht, so daß fortwährend gleichbleibende Stoffübergangswerte erreicht werden, wobei Totzonen im Bereich der Oberfläche der Filterelemente, in denen sich Inhaltsstoffe der zu trennenden Medien aufkonzentrieren können, vermieden werden sollen und dann, wenn die Vorrichtung auch nach der Methode der Pervaporation betrieben wird, was grundsätzlich auch möglich sein soll, die Zufuhr großer Wärmemengen mit dem zu trennenden Medium zum Ort der Trennung des Mediums innerhalb der Vorrichtung ermöglicht wird, so daß bei geringem Verfahrensweg ein möglichst geringer Temperaturabfall die Folge ist, und wobei die Vorrichtung einfach herstellbar und kostengünstig bereitstellbar sein soll, so daß sie auch für Anwendungen in einem kleinen Bereich einsetzbar ist.

Gelöst wird die Aufgabe gemäß der Erfindung dadurch, daß im wesentlichen quer zur Durchtrittsöffnung auf wenigstens einer Oberfläche des Abstandselements wenigstens ein Kanal angeordnet ist, und daß der Kanal im wesentlichen parallel zur Sehne ausgebildet ist.

Der Vorteil der erfindungsgemäßen Lösung besteht im wesentlichen darin, daß durch die Anordnung bzw. das Vorsehen wenigstens eines Kanals quer zur Durchtrittsöffnung auf einfache, aber sehr effektive Weise dafür Sorge getragen wird, daß sich das durch die Durchgangsöffnung hindurchtretende zu trennende Medium, also in die Trennkammer hinein, in der das Filterelement angeordnet ist, gleichmäßig über die gesamte Breite des Filterelements verteilen kann und somit das Filterelement, wie angestrebt, optimal über seine gesamte zur Verfügung stehende Oberfläche vom zu trennenden Medium beidseitig überströmt werden kann. Untersuchungen haben gezeigt, daß mit dieser verhältnismäßig einfachen Maßnahme das erfindungsgemäß angestrebte Ziel, nämlich möglichst konstante Überströmgeschwindigkeiten auf allen Filterelementen bzw. in effektiven Bereichen der Filterelemente zu erreichen, tatsächlich erreicht wird, was gleichermaßen für die angestrebten konstanten Re-Zahlen gilt und auch für gleichbleibende Stoffübergangswerte. Der bzw. die Kanäle sorgen dafür, daß zunächst das durch die Durchtrittsöffnung zugeführte zu trennende Medium über die gesamte mögliche Breite des Filterelementes verteilt wird und von dort dann tatsächlich das Filterelement gleichmäßig großflächig und beidseitig überstreichen kann.

Dadurch, daß die Durchtrittsöffnung durch einen das Abstandselement außen begrenzenden Begrenzungsrand und durch eine den Begrenzungsrand verbindende gedachte Sehne gebildet wird, kann die Durchtrittsöffnung in dem Bereich des Abstandselements geschaffen werden, der an sich für die überströmung eines Filterelements mit zu trennenden Medium am wenigsten effektiv wäre. Gleiches gilt auch für den Fall, daß Abstandselemente mit zwei im wesentlichen gegenüberliegenden Durchtrittsöffnungen verwendet werden, d.h. für den Fall, daß Abstandselemente in der Vorrichtung eingesetzt werden, die einen Parallelbetrieb einer Mehrzahl dadurch ausgebildeter Kammern ermöglichen, in denen jeweils das Filterelement auf bekannte Weise eingeschlossen ist und vom zu trennenden Medium umflossen wird.

Ein Optimum an effektiver Überströmmöglichkeit des zu trennenden Mediums über die zwischen den Abstandselementen jeweils eingeschlossenen Filterelemente zu deren beiden Seiten wird dadurch erreicht, daß der Kanal bzw. die Kanäle im wesentlichen parallel zur Sehne angeordnet sind.

Um den Eintrittsquerschnitt in eine jeweilige Trennkammer, die zwischen zwei aneinandergrenzenden Abstandselementen, in denen das Filterelement eingeschlossen ist, gebildet wird, möglichst groß zu gestalten, was dem Ziel dient, im Einlaufbereich und im Auslaufbereich der Kammern konstante Geschwindigkeiten des zu trennenden Mediums zu erreichen und keine Beschleunigung zu erreichen, ist es vorteilhaft, die Sehnenlänge, bezogen auf einen gedachten Mittelpunkt des Abstandselements, > 60° auszubilden.

Vorteilhaft ist es zum Erreichen einer noch gleichmäβigeren Verteilung des zu trennenden Mediums über die gesamten Oberflächen des Filterelements, zwischen Filterelement und Abstandselement ein mediumdurchlässiges Zwischenelement, das beispielsweise aus einem Gewebe bestehen kann, anzuordnen.

Vorzugsweise wird auf wenigstens einer Oberfläche des Abstandselements eine Mehrzahl von erhaben von der Oberfläche wegstehender Vorsprünge angeordnet, die unterschiedlich gestaltbar sein können, wobei aber die Vorsprünge eine Leitfunktion für das zu trennende Medium beim Überstreichen der Oberfläche des Abstandselements bzw. der Membranelemente haben.

Bei einer sehr vorteilhaften Ausgestaltung der Vorrichtung sind die Vorsprünge im wesentlichen in einem Winkel im Bereich von 45° zum Strömungsverlauf des die Oberfläche des Abstandselements überstreichenden Strömungsmediums angeordnet, wobei die Längen der Vorsprünge derart bemessen sind, daß sie zur Schaffung einer freien Mediumpassage zwischen den Vorsprüngen nicht aneinandergrenzen, d.h. die Vorsprünge sind so angeordnet, daß sie quasi ein Labyrinth bilden, durch das zumindest anteilsmäßig das die Kammer zwischen zwei Abstandselementen durchströmende Medium hindurchströmen kann, und zwar von einer Durchtrittsöffnung zur anderen Durchtrittsöffnung bei Abstandselementen mit zwei Durchtrittsöffnungen und von einer Durchtrittsöffnung in einem Abstandselement in die gegenüberliegende Durchgangsöffnung hinein des darauf oder darunter angeordneten benachbarten Abstandselements.

Eine ebenfalls sehr vorteilhafte andere Ausgestaltung der Vorrichtung sieht vor, daß der Verlauf der Vorsprünge im wesentlichen halbkreisförmig, bezogen auf einen gedachten Mittelpunkt des Abstandselements, ausgebildet ist, wobei die Vorsprünge im wesentlichen von einer Durchtrittsöffnung zur gegenüberliegenden anderen Durchtrittsöffnung entweder bei einem Abstandselement mit zwei Durchgangsöffnungen verlaufen oder zur anderen Durchtrittsöffnung des jeweils darauf oder darunter angeordneten benachbarten Abstandselements. Diese zuletzt beschriebene Ausgestaltung wird eine geringere Verwirbelung und damit geringeren Druckverlust des zu trennenden Mediums beim Überstreichen des Abstandselements bzw. des zwischen zwei Abstandselementen eingeschlossenen Filterelements ermöglichen als die zuvor beschriebene andere Ausgestaltung der Vorrichtung bzw. des Abstandselements, die aus diesem Grunde besonders gut für z.B. hochviskose oder stark belastete Medien geeignet ist.

Auch ist vorzugsweise die Höhe der Vorsprünge, was gleichermaßen für beide vorangehend beschriebenen Ausgestaltungen der Vorrichtung gilt, derart bemessen, daß sie das Filterelement, das zwischen zwei Abstandselementen angeordnet ist, nicht berühren, d.h. daß ein minimaler Spalt zwischen dem Filterelement und den Vorsprüngen besteht, so daß diese sich nicht in die Oberfläche des Filterelements eindrücken können und somit eine Abschattung auf dem Filterelement weitestgehend vermieden wird. Die Höhe der Vorsprünge kann auch derart bemessen werden, daß auch bei zwischen Filterelement und Abstandselement angeordnetem Zwischenelement, wenn dieses bei einer besonderen Ausgestaltung der Vorrichtung vorgesehen ist, ebenfalls ein minimaler Spalt zum Filterelement vorgesehen ist, so daß auch in diesem Falle die Vorsprünge sich nicht in die Oberfläche des Filterelements eindrücken können und somit auch hier eine Abschattung des Filterelements weitgehend vermieden wird.

Vorteilhafterweise ist der äußere Begrenzungsrand des Abstandselements in axialer Richtung mit einer derartigen Dicke ausgebildet, daß jeweils zwei aufeinanderliegende Abstandselemente zwischen sich jeweils wenigstens das Filterelement berührungslos einschließen können. Das Filterelement ist somit nur im Bereich der zentralen Permeatabfuhröffnung abgestützt und kann sich somit bei Temperaturänderungen frei ausdehnen bzw. zusammenziehen.

Um ein Gehäuse, in dem der auf vorbestimmte Weise zusammengestellte Abstandselementen- bzw. Filterelementenstapel bei herkömmlichen Konstruktionen nach außen druckdicht aufgenommen ist, zu vermeiden, weist der Begrenzungsrand des Abstandselements eine das Abstandselement kreisförmig umlaufende Nut zur Aufnahme eines Dichtungselements auf, das vorzugsweise in Form eines 0-Ringes ausgebildet ist, so daß die Abstandselemente derart gegeneinander gedichtet aufgestapelt werden können, daß auf ein diese umgebendes Gehäuse verzichtet werden kann und somit Vorrichtungen dieser Art kostengünstig hergestellt und bereitgestellt werden können.

Um zudem vorzugsweise ein Verschieben des Filterelements während des Montagevorganges, und, falls dieses ebenfalls vorgesehen ist, des zwischengelegten mediendurchlässigen Zwischenelements relativ zum Abstandselement zu vermeiden, ist vorteilhafterweise auf dem Abstandselement im Bereich des Begrenzungsrandes eine Mehrzahl von Vorsprüngen zur zentrierenden Aufnahme des Filterelements und/oder eines Zwischenelements angeordnet, wobei diese Vorsprünge zusätzlich auch noch die Wirkung haben können, daß diese künstliche Widerstände für das zu trennende Medium bilden, durch die die Geschwindigkeit des zu trennenden Mediums soweit reduziert wird, daß Ablagerungen, die mit dem zu trennenden Medium mitgeführt werden bzw. Bestandteile dieses Mediums sind, vermieden werden.

Als Werkstoff für die Herstellung der Abstandselemente eignen sich an sich alle beliebigen geeigneten Werkstoffe, soweit sie auf zu trennende Medium abgestimmt sind. Da es ein wesentliches Ziel der erfindungsgemäßen Vorrichtung ist, diese auch in bezug auf ihre Einzelkomponenten, zu denen auch das Abstandselement gehört, kostengünstig und schnell herstellen zu können und mit hoher Genauigkeit, ist es vorteilhaft, dafür einen spritzgußfähigen Kunststoffwerkstoff zu verwenden. Grundsätzlich sind aber auch metallische Werkstoffe zur Ausbildung des Abstandselements denkbar.

Die Erfindung wird nun unter Bezugnahme auf die nachfolgenden schematischen Zeichnungen anhand eines Ausführungsbeispieles beschrieben. Darin zeigen:
- Fig. 1: eine Vorrichtung gemäß der Erfindung im Schnitt, wobei der oberhalb der Mittellinie bzw. Achse dargestellte Teil der Vorrichtung eine solche mit innenliegendem, rohrförmigem Verbindungsbolzen darstellt, der gleichzeitig die Wirkung eines Permeatabflußrohres aufweist, und der unterhalb der Mittellinie bzw. Achse dargestellte Teil der Vorrichtung eine solche mit außenliegenden Verbindungsbolzen darstellt,
- Fig. 2: eine Draufsicht auf ein Abstandselement mit nur einer Durchtrittsöffnung für das zu trennende Medium, wobei dieses Abstandselement stellvertretend für die gezeichnet ist, die eine Reihenschaltung ermöglichen,
- Fig. 3: eine Draufsicht auf das Abstandselement gemäß Fig. 2 mit einer ersten Art von auf der bzw. den Oberflächen des Abstandselements angeordneten Vorsprüngen zur Leitung des Mediums über die Oberfläche mit zwei Durchtrittsöffnungen,
- Fig. 4: eine Draufsicht auf das Abstandselement gemäß Fig. 2 mit einer zweiten Art von Vorsprüngen, die auf der bzw. den Oberflächen des Abstandelements ausgebildet sind, zur Leitung des Mediums über die Oberfläche,
- Fig. 5: einen Schnitt im Ausschnitt durch ein hier beispielhaft aus mehreren Abstandselementen und dazwischen angeordneten Filterelementen bestehender Abstandselementstapel in vergrößertem Maßstab und

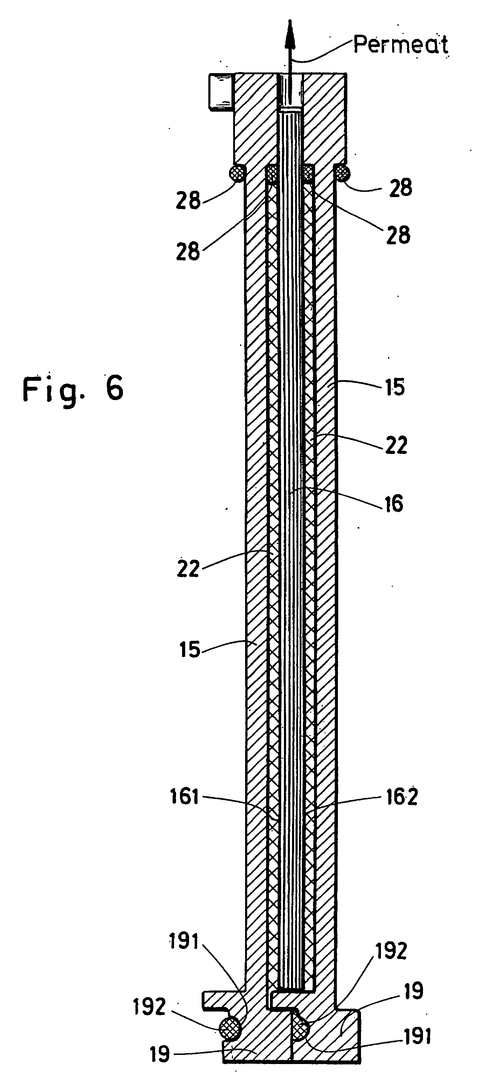

- Fig. 6: einen Schnitt durch einen aus mehreren Abstandselementen bestehenden Stapel unter Einschluß eines Filterelements sowie zwischengelegter mediendurchlässiger Zwischenelemente entlang der Linie A-B von Fig. 4 in vergrößertem Maßstab.

Der grundsätzliche Aufbau der Vorrichtung 10 ist an sich der Fachwelt bekannt, so daß im folgenden bezüglich des Gesamtaufbaus der Vorrichtung 10 dieser nur kurz beschrieben wird. Vorrichtungen 10 dieser Art dienen zum Filtern und Trennen von Strömungsmedien 14, wobei diese nach dem Prinzip der Mikrofiltration, der Ultrafiltration, der Umkehrosmose oder auch der Pervaporation betrieben werden können. Die Vorrichtung 10 weist plattenförmige Endflansche 29, 30 auf, in denen jeweils ein Stutzen 31, durch den das Strömungsmedium 14 in die Vorrichtung einfließt, ausgebildet ist, und einen Stutzen 32, durch den das an- bzw. abgereicherte Strömungsmedium 14, d.h. das Retentat, austritt. Die Stutzen 31, 32 bilden somit die Eintrittsöffnung 11 für das Strömungsmedium 14 und die Austrittsöffnung 12 für das die Vorrichtung 10 verlassende Retentat.

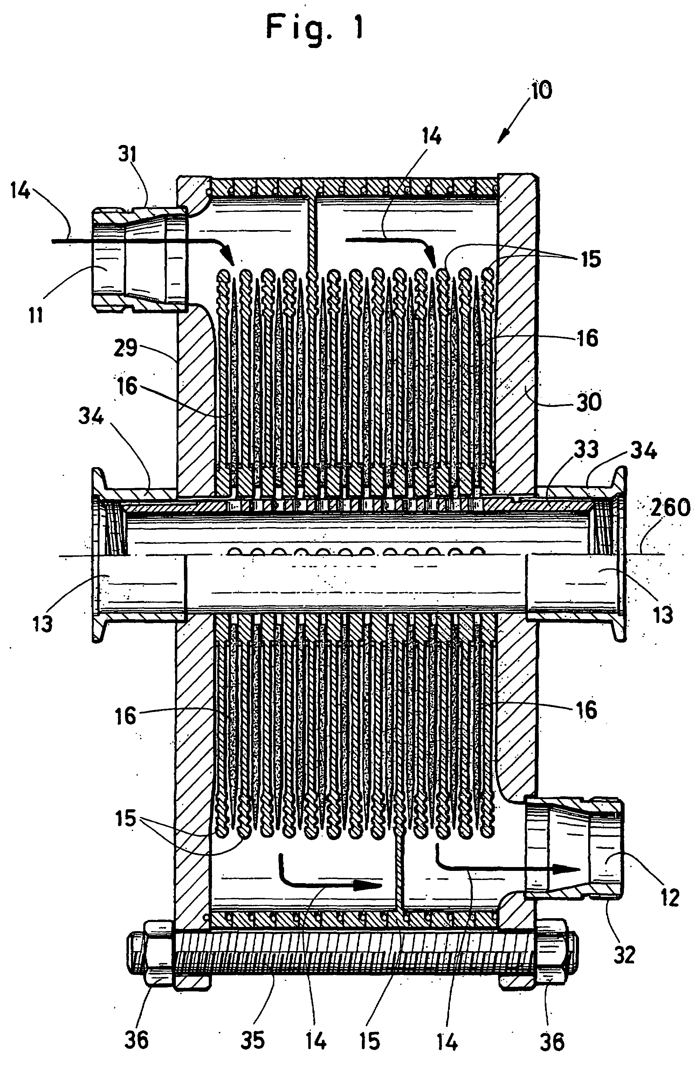

Regelmäßig sind derartige Vorrichtungen 10 mit einem diese im wesentlichen zentral durchquerenden Permeatabflußrohr 33 versehen, das bei der Vorrichtung 10 in der Ausgestaltung gemäß Fig. 1 oberhalb der Mittellinie bzw. Vorrichtungsachse 260 vorgesehen ist. Bei dieser Ausgestaltung kann das Permeatabflußrohr 33 mittels zweier Gewindehülsen 34 auch die Funktion eines den aus Abstandselementen 15, Filterelementen 16 und gegebenenfalls Zwischenelementen 22 gebildeten Stapels einschließlich der Endflanschen 29, 30 dichtend zusammenhalten.

Die Vorrichtung 10 kann aber auch, vergleiche den unterhalb der Vorrichtungsachse 260 liegenden Teil, durch außenliegende Bolzen 35, die mit Muttern 36 versehen sind, zusammengehalten werden. In diesem Falle entfällt das gesonderte Permeatabflußrohr 33 und die Gewindehülsen 34 werden ohne Gewinde geeignet in den Endflanschen 29, 30 befestigt.

Aus Fig. 1 ist zusätzlich noch der typische Aufbau eines Stapels aus Abstandselementen 15, Filterelementen 16 und hier zur verdeutlichten Darstellung weggelassenen Zwischenelementen 22 ersichtlich, wie er typischerweise in derartigen Vorrichtungen 10 zusammengestellt bzw. benutzt wird. Die Darstellung gemäß Fig. 1 ist lediglich beispielhaft zu verstehen, d.h. der Stapel kann natürlich, je nach Anwendungsfall, aus noch sehr viel mehr Abstandselementen 15, Filterelementen 16 und Zwischenelementen 22 bestehen, er kann im Einzelfall aber auch aus weniger dieser Elemente bestehen, wie sie in Fig. 1 dargestellt sind.

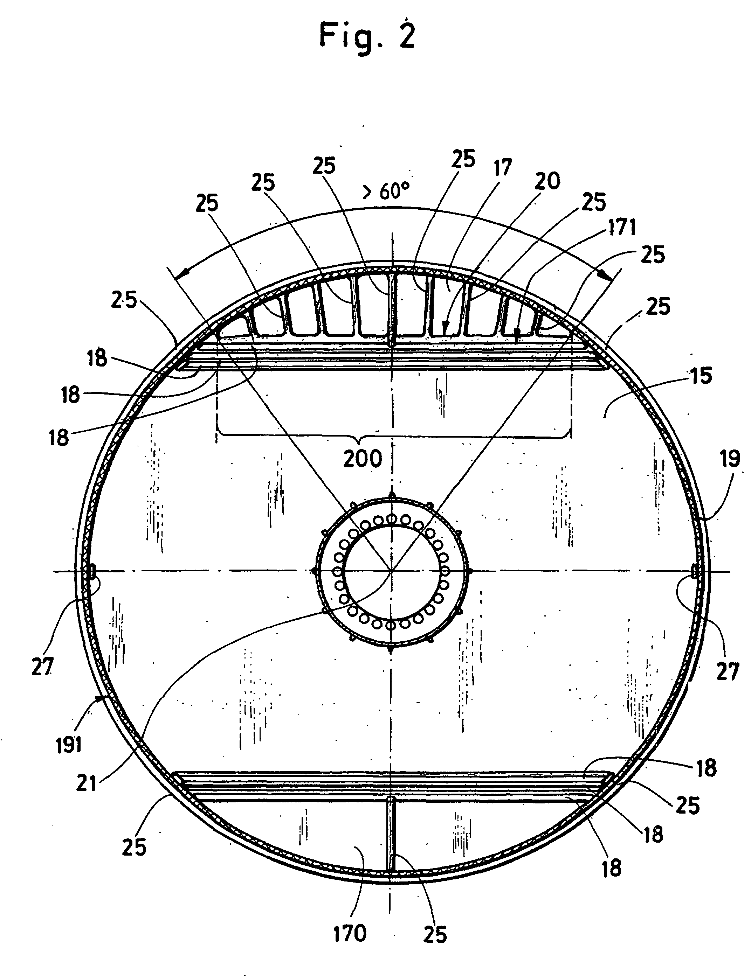

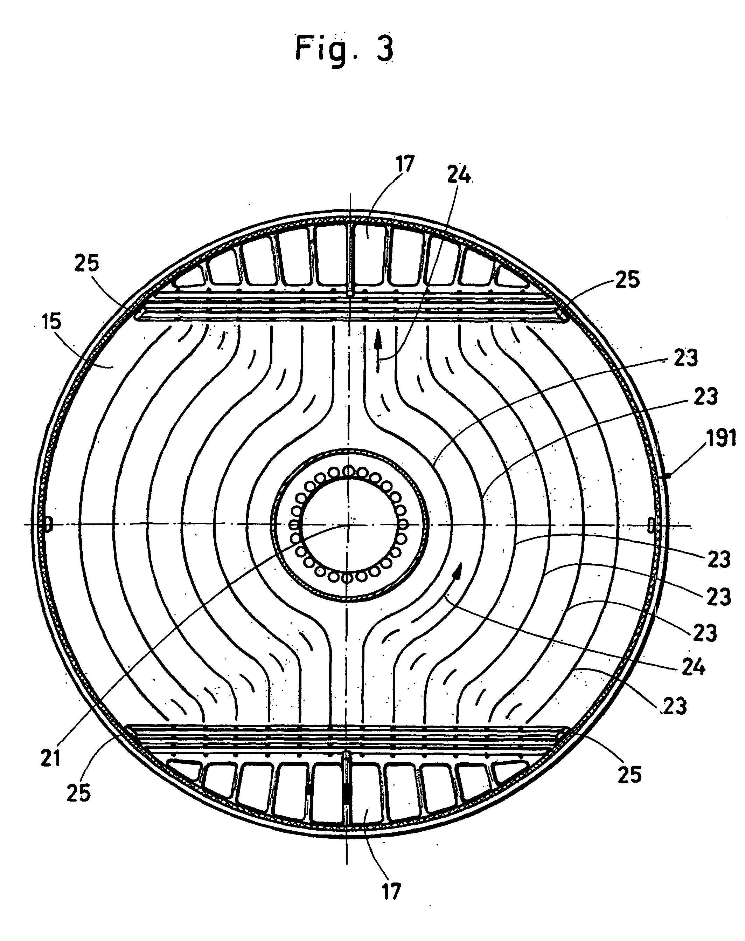

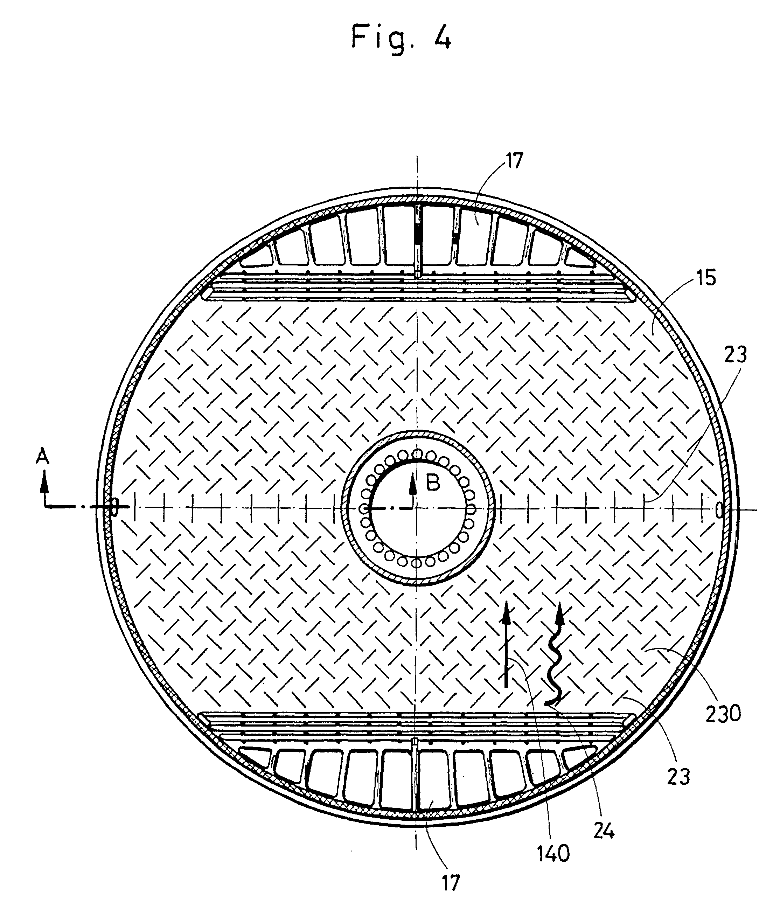

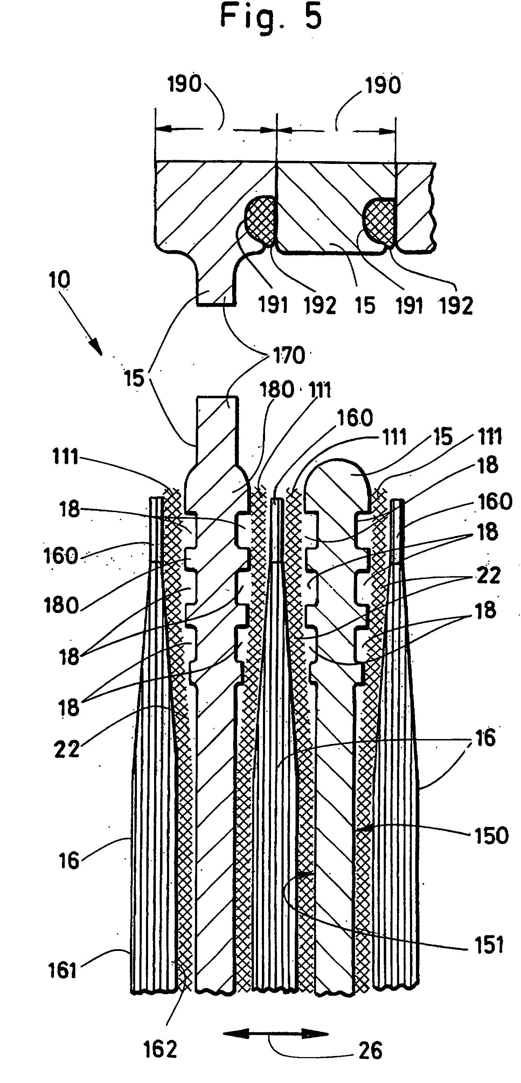

Bezug genommen wird zunächst auf die Fig. 2 und 5, wobei Fig. 2 den typischen Aufbau des in der Vorrichtung 10 verwendeten Abstandselements 15 zeigt. Das in Fig. 2 dargestellte Abstandselement weist im Gegensatz zu dem gemäß den Figuren 3 und 4 nur eine Durchtrittsöffnung 17 auf, die im Körper des Abstandselements 15 durch den umlaufenden, äußeren Begrenzungsrand 19 und durch eine den Begrenzungsrand 19 verbindende gedachte Sehne 20 gebildet wird. Im wesentlichen quer zur Durchtrittsöffnung 17 bzw. im wesentlichen parallel zur Sehne 20 der Durchgangsöffnung ist eine Mehrzahl von Kanälen 18 vorgesehen, vergleiche auch die Schnittdarstellung gemäß Fig. 5. Die Kanäle 18 werden prinzipiell durch parallel zu den Kanälen 18 verlaufende Stege 180 gebildet, wobei die Höhe der Stege, bezogen auf die Oberflächen 150, 151 des Abstandselements 15, vom äußeren Begrenzungsrand 19 aus in Richtung der Achse 260 der Vorrichtung 10 abnimmt. Zwar sind in den in den Figuren dargestellten Ausgestaltungen des Abstandselements 15 nur pro Durchtrittsöffnung 17 und geschlossener Variante 170 drei Kanäle 18 vorgesehen, die Anzahl der Kanäle kann aber in Abhängigkeit unterschiedlich wählbarer Ausgestaltungen der Abstandselemente 15 variiert werden, so daß die hier dargestellte Zahl von drei Kanälen nur beispielhaft zu verstehen ist.
Die Durchtrittsöffnung 17 weist eine Mehrzahl von Streben 25 auf, die von der Sehne 20 zum äußeren Begrenzungsrand 19 verlaufen. Das Querschnittsprofil der Stege 25 kann variieren, d.h. der mittlere Steg 25 kann dicker ausgeführt sein als die zu den beiden Rändern hin angeordneten Stege, so daß mittels dieser Maßnahme schon im Bereich der Durchtrittsöffnung 17
eine Querströmung des zu trennenden Mediums 14 zur besseren Verteilung stattfinden kann. Die öffnungsweite der Durchtrittsöffnung 17 wird durch die Sehnenlänge 200 bestimmt, die, bezogen auf einen gedachten Mittelpunkt 21 des Abstandselements 15, > 60° ist.

Die Figuren 3 und 4 zeigen unterschiedliche Ausgestaltungen des Abstandselements 15 in bezug auf das Vorsehen von Vorsprüngen 23 auf den jeweiligen beiden Oberflächen 150, 151 oder wenigstens nur auf einer der Oberflächen 150, 151. Bei der in Fig. 3 dargestellten Ausführungsform des Abstandselements 15 ist der Verlauf der Vorsprünge 23 im wesentlichen halbkreisförmig, bezogen auf den gedachten Mittelpunkt 21 des Abstandselements 15, wobei die Vorsprünge 23 im wesentlichen von einer Durchtrittsöffnung 17 zur anderen Durchtrittsöffnung 17 verlaufen, so daß zwischen den Vorsprüngen eine Mediumpassage 24 gebildet wird. Bei der Ausgestaltung des Abstandselements 15 gemäß Fig. 4 sind die Vorsprünge 23 im wesentlichen in einem Winkel im Bereich von 45° zum Strömungsverlauf 140 des die Oberfläche 150, 151 des Abstandselements 15 überstreichenden Strömungsmediums 14 angeordnet. Die Längen 230 der Vorsprünge 23 sind derart bemessen, daß sie zur Schaffung einer Mediumpassage 24 zwischen den Vorsprüngen 23 nicht aneinander angrenzen, d.h. zwar quasi ein Labyrinth bilden, aber dennoch einen Durchgang bzw. eine Mediumpassage 24 von einer Durchtrittsöffnung 17 zur anderen Durchtrittsöffnung 17 gestatten. Auch die in Fig. 4 dargestellten Vorsprünge 23 sind hier nur beispielhaft zu verstehen, sie können in ihrer Länge und ihrer Anordnung auf vielerlei Weise variieren.

Fig. 5 zeigt in Verbindung mit Fig. 1 den Stapel aus Abstandselementen 15, Filterelementen 16 und zwischen Abstandselement 15 und Filterelement 16 zu liegen kommenden Zwischenelementen 22. Das Zwischenelement 22 ist aus einem für das zu trennende Strömungsmedium 14 strömungsdurchlässigen Werkstoff hergestellt, beispielsweise aus einem Gewebe oder einem Vlies. Die Filterelemente 16 sind an sich von im Stand der Technik bekannter Bauart, d.h. sie werden durch sogenannte Membrantaschen gebildet, die also aus zwei äußeren Membranelementen 161, 162 bestehen, die mittels einer umlaufenden Schweißnaht 160 auf bekannte Weise dichtend miteinander verbunden sind. Auf bekannte Weise dringt das die Membranelemente 161, 162 überstreichende Strömungsmedium 14 in bezug auf seine permeierenden Bestandteile durch diese hindurch und wird zum Zentrum in Richtung Mittelpunkt 21 des hier nicht gesondert dargestellten Filterelements 16 in Form der Membrantasche abgeführt und verläßt die Vorrichtung 10 durch die Austrittsöffnung 13 für das Permeat auf an sich bekannte Weise. Die Filterelemente 16 sind, vergleiche Fig. 5, an ihren zur Durchtrittsöffnung 17 und zum geschlossenen Segment 170 gerichteten Seiten verjüngt ausgebildet, so daß die Eintrittsöffnung 111 für das zu trennende Medium 14 in die zwischen zwei Abstandselementen 15 gebildeten Kammer vergrößert wird.

Die Höhe der Vorsprünge 23 auf den Abstandselementen 15 sowie die Dicke des Zwischenelementes 22, so sie denn vorgesehen sind, ist so bemessen, daß ein minimaler Spalt zum Filterelement 16 besteht, so daß die Vorsprünge 23 sich nicht in die Oberfläche des Filterelements 16, d.h. in die eigentlichen Membranelemente 161, 162, eindrücken können, so daß eine Abschattung auf dem Filterelement 16 für das Strömungsmedium 14 vermieden wird.

Der äußere Begrenzungsrand 19 ist in axialer Richtung 26 derart dick bemessen, d.h. weist eine derartige Dicke 190 auf, daß zwei aufeinanderliegende Abstandselemente 15 zwischen sich wenigstens das Filterelement 16 oder das Filterelement 16 und das Zwischenelement 22 berührungslos einschließen. Der Begrenzungsrand 19 weist zudem eine umlaufende Nut 191 zur Aufnahme eines Dichtungselementes 192, beispielsweise in Form eines 0-Ringes, auf. Durch diese Maßnahme ist die Ausbildung eines selbstdichtenden Abstandselementstapels, wie er beispielsweise in Fig. 1 dargestellt ist, in Verbindung mit dem zentralen Permeatabflußrohr 33 sowie der Endflansche 29, 30 und der Gewindehülsen 34 möglich oder aber mittels äußerer Bolzen 35 in Verbindung mit den damit zusammenwirkenden Muttern 36 sowie den Endflanschen 29, 30.

Es sei an dieser Stelle noch darauf hingewiesen, daß in der erfindungsgemäßen Vorrichtung 10 sowohl Abstandselemente 15 mit einer Durchtrittsöffnung 17 als auch Abstandselemente 15 mit zwei Durchtrittsöffnungen 17 ausgebildet werden können, die, bezogen auf ihre jeweiligen Sehnen 20, im wesentlichen parallel gegenüber angeordnet sind. Somit gestattet die Verwendung von Abstandselementen 15 mit einer Durchtrittsöffnung 17 durch entsprechende Anordnung der Abstandselemente 15 aufeinander ein serielles Durchlaufen des Strömungsmediums 14 durch den Stapel aus derart ausgebildeten Abstandselementen 15, wohingegen die Verwendung von Abstandselementen 15 mit zwei Durchtrittsöffnungen 17 die Ausbildung eines Abstandselementstapels für parallele Anströmung bzw. Parallelbetrieb ermöglicht.

### Bezugszeichenliste

- 10: Vorrichtung
- 11: Eintrittsöffnung (in die Vorrichtung des zu trennendes Medium)
- 111: Eintrittsöffnung (in die zwischen zwei Abstandseiementen 15 gebildete Kammer)
- 12: Austrittsöffnung (Retentat)
- 13: Austrittsöffnung (Permeat)
- 14: Strömungsmedium
- 140: Strömungsverlauf
- 15: Abstandselement
- 150: Oberfläche
- 151: Oberfläche
- 16: Filterelement
- 160: Schweißnaht
- 161: Membranelement
- 162: Membranelement
- 17: Durchtrittsöffnung
- 170: geschlossene Seite (bei Abstandseiement für die Reihenschaltung)
- 18: Kanal
- 180: Steg
- 19: Begrenzungsrand
- 190: Begrenzungsranddicke
- 191: Nut
- 192: Dichtungselement
- 20: Sehne
- 200: Sehnenlänge
- 21: Mittelpunkt (des Abstandselements)
- 22: Zwischenelement
- 23: Vorsprung
- 230: Länge (Vorsprung)
- 24: Mediumspassage
- 25: Strebe
- 26: Axialrichtung
- 260: Achse
- 27: Vorsprung
- 28: Dichtungselement
- 29: Endflansch
- 30: Endflansch
- 31: Stutzen (Strömungsmedium)
- 32: Stutzen (Retentat)
- 33: Permeatablußrohr
- 34: Gewindehülse
- 35: Bolzen
- 36: Mutter

## Patentansprüche

1. Vorrichtung (10) zum Filtern und Trennen von Strömungsmedien (14) durch Pervaporation, Mikrofiltration, Ultrafiltration und Umkehrosmose, umfassend eine Eintrittsöffnung (11) für das zu trennende Medium (14), sowie Austrittsöffnungen (12, 13) für das Retentat und das Permeat, sowie eine Mehrzahl von Abstandselementen (15) zur Lenkung der Strömungsmedien (14), wobei jeweils zwischen zwei im wesentlichen scheibenförmigen, eine Trennkammer bildenden Abstandselementen (15), die vom Strömungsmedium (14) umflossen werden, ein nach Art einer Membrantasche ausgebildetes Filterelement (16) eingeschlossen ist, das vom Strömungsmedium (14) beidseitig umflossen wird, und wobei wenigstens eine im Randbereich des Abstandselements (15) ausgebildete Durchtrittsöffnung (17) für das Strömungsmedium ausgebildet ist, und daß die Durchtrittsöffnung (17) durch einen umlaufenden äußeren Begrenzungsrand (19) und durch eine den Begrenzungsrand (19) verbindende gedachte Sehne (20) gebildet wird, **dadurch gekennzeichnet, daß** im wesentlichen quer zur Durchtrittsöffnung (17) auf wenigstens einer Oberfläche (150, 151) des Abstandselements (15) wenigstens ein Kanal (18) angeordnet ist und daß der Kanal (18) im wesentlichen parallel zur Sehne (20) ausgebildet ist.

2. Vorrichtung nach Anspruch 1, **dadurch gekennzeichnet, daß** die Sehnenlänge (200), bezogen auf einen gedachten Mittelpunkt (21) des Abstandselements (15), > 60° ist.

3. Vorrichtung nach einem oder beiden der Ansprüche 1 oder 2, **dadurch gekennzeichnet, daß** zwischen Filterelement (16) und Abstandselement (15) ein mediumdurchlässiges Zwischenelement (22) angeordnet ist.

4. Vorrichtung nach einem oder mehreren der Ansprüche 1 bis 3, **dadurch gekennzeichnet, daß** auf wenigstens einer Oberfläche (150, 151) des Abstandselementes (15) eine Mehrzahl von erhaben von der Oberfläche (150, 151) wegstehende Vorsprünge (23) angeordnet ist.

5. Vorrichtung nach Anspruch 4, **dadurch gekennzeichnet, daß** die Vorsprünge (23) im wesentlichen in einem Winkel im Bereich von 45° zum Strömungsverlauf (140) des die Oberfläche (150, 151) des Abstandselements (15) überstreichenden Strömungsmediums (14) angeordnet sind, wobei die Längen (230) der Vorsprünge (23) derart bemessen sind, daß sie zur Schaffung einer Mediumpassage (24) zwischen den Vorsprüngen (23) nicht aneinander angrenzen.

6. Vorrichtung nach Anspruch 4, **dadurch gekennzeichnet, daß** der Verlauf der Vorsprünge (23) im wesentlichen halbkreisförmig, bezogen auf einen gedachten Mittelpunkt (21) des Abstandselementes (15), ist, wobei die Vorsprünge (23) im wesentlichen von einer Durchtrittsöffnung (17) zur gegenüberliegenden anderen Durchtrittsöffnung (17) verlaufen oder zur gegenüberliegenden Seite des Abstandselements verlaufen.

7. Vorrichtung nach Anspruch 6, **dadurch gekennzeichnet, daß** die Vorsprünge (23) einen unterbrochenen Verlauf haben.

8. Vorrichtung nach einem oder mehreren der Ansprüche 5 bis 7, **dadurch gekennzeichnet, daß** auf wenigstens einer Oberfläche (150, 151) des Abstandselements (15) sowohl Vorsprünge (23) der Art mit einem Winkel im Bereich von 45° als auch Vorsprünge (23) der halbkreisförmigen Art angeordnet sind.

9. Vorrichtung nach einem oder mehreren der Ansprüche 4 bis 8, **dadurch gekennzeichnet, daß** die Höhe der Vorsprünge (23) derart bemessen ist, daß sie das Filterelement (16), das zwischen zwei Abstandselementen (15) angeordnet ist, nicht berühren.

10. Vorrichtung nach einem oder mehreren der Ansprüche 1 bis 9, **dadurch gekennzeichnet, daß** die Durchtrittsöffnung (17) wenigstens eine Strebe (25), die von der Sehne (20) zum äußeren Begrenzungsrand (19) verläuft, aufweist.

11. Vorrichtung nach einem oder mehreren der Ansprüche 1 bis 10, **dadurch gekennzeichnet, daß** die Vorderkante (171) der Durchtrittsöffnung (17) im Querschnitt zum Begrenzungsrand (19) hin sich verjüngend ausgebildet ist.

12. Vorrichtung nach einem oder mehreren der Ansprüche 1 bis 11, **dadurch gekennzeichnet, daß** die Kanäle (18) in Richtung des Begrenzungsrandes (19) einen zunehmenden Kanalquerschnitt aufweisen.

13. Vorrichtung nach einem oder mehreren der Ansprüche 1 bis 12, **dadurch gekennzeichnet, daß** der äußere Begrenzungsrand (19) in axialer Richtung (26) des Abstandselements (15) eine derartige Dicke (190) aufweist, daß zwei aufeinanderliegende Abstandselemente (15) zwischen sich wenigstens das Filterelement (16) berührungslos einschließen können.

14. Vorrichtung nach Anspruch 13, **dadurch gekennzeichnet, daß** der Begrenzungsrand (19) eine das Abstandselement (15) kreisförmig umlaufende Nut (191) zur Aufnahme eines Dichtungselementes (192) aufweist.

15. Vorrichtung nach Anspruch 14, **dadurch gekennzeichnet, daß** das Dichtungselement (192) ein 0-Ring ist.

16. Vorrichtung nach einem oder mehreren der Ansprüche 1 bis 15, **dadurch gekennzeichnet, daß** auf dem Abstandselement (15) im Bereich des Begrenzungsrandes (19) eine Mehrzahl von Vorsprüngen (27) zur zentrierenden Aufnahme des Filterelements (16) und/oder eines Zwischenelementes (22) angeordnet ist.

17. Vorrichtung nach einem oder mehreren der Ansprüche 1 bis 16, **dadurch gekennzeichnet, daß** das Abstandselement (15) aus einem spritzgußfähigen Kunststoffwerkstoff besteht.

## Claims

1. Device (10) for filtering and separating flowing media (14) by pervaporation, microfiltration, ultrafiltration and reverse osmosis, comprising an inlet opening (11) for the medium to be separated (14) and also outlet openings (12, 13) for the retentate and the permeate, together with a plurality of spacer elements (15) to direct the flowing media (14), whereby a filter element (16) shaped like a membrane pocket, around both sides of which the flowing medium (14) flows, is enclosed in each case between two essentially disk-shaped spacer elements (15) that form a separation compartment and around which the flowing medium (14) flows, and whereby at least one transfer opening (17) for the flowing medium, constructed in the edge region of the spacer element (15), is created for the flowing medium, and in that the transfer opening (17) is formed by a surrounding outer boundary margin (19) and by an imaginary chord (20) connecting the boundary margin (19), **characterised in that** at least one channel (18) is arranged essentially at right angles to the transfer opening (17) on at least one surface (150, 151) of the spacer element (15) and **in that** the channel (18) is constructed essentially parallel to the chord (20).

2. Device according to Claim 1, **characterized in that** the chord length (200), in relation to an imaginary centre point (21) of the spacer element (15), is > 60°.

3. Device according to one or both of the Claims 1 or 2, **characterized in that** an intermediate element (22) that is pervious to the medium is arranged between the filter element (16) and the spacer element (15).

4. Device according to one or more of the Claims 1 to 3, **characterized in that** a plurality of projecting protrusions (23) raised above the surface (150, 151) is arranged on at least one surface (150, 151) of the spacer element (15).

5. Device according to Claim 4, **characterized in that** the protrusions (23) are arranged essentially at an angle in the region of 45° relative to the flow path (140) of the flowing medium (14) passing over the surface (150, 151) of the spacer element (15), whereby the lengths (230) of the protrusions (23) are dimensioned such that they do not adjoin one another, to create a passage for the medium (24) between the protrusions (23).

6. Device according to Claim 4, **characterized in that** the path of the protrusions (23) is essentially semicircular relative to an imaginary centre point (21) of the spacer element (15), whereby the protrusions (23) run essentially from one transfer opening (17) to the other transfer opening (17) lying opposite, or run to the opposite-side of the spacer element.

7. Device according to Claim 6, **characterized in that** the protrusions (23) have an interrupted path.

8. Device according to one or more of the Claims 5 to 7, **characterized in that** both protrusions (23) of the kind with an angle in the region of 45° as well as protrusions (23) of the semicircular kind are arranged on at least one surface (150, 151) of the spacer element (15).

9. Device according to one or more of the Claims 4 to 8, **characterized in that** the height of the protrusions (23) is dimensioned such that they do not touch the filter element (16) that is arranged between two spacer elements (15).

10. Device according to one or more of the Claims 1 to 9, **characterized in that** the transfer opening (17) has at least one rib (25) running from the chord (20) to the outer boundary margin (19).

11. Device according to one or more of the Claims 1 to 10, **characterized in that** the front edge (171) of the transfer opening (17) is constructed with a cross-section that narrows towards the boundary margin (19).

12. Device according to one or more of the Claims 1 to 11, **characterized in that** the channels (18) have a channel cross-section that increases in the direction of the boundary margin (19).

13. Device according to one or more of the Claims 1 to 12, **characterized in that** the outer boundary margin (19) in the axial direction (26) of the spacer element (15) has a thickness (190) such that two superimposed spacer elements (15) can enclose at least the filter element (16) between them without any contact.

14. Device according to Claim 13, **characterized in that** the boundary margin (19) has a groove (191) running in a circle around the spacer element (15) to accommodate a sealing element (192).

15. Device according to Claim 14, **characterized in that** the sealing element (192) is an O-ring.

16. Device according to one or more of the Claims 1 to 15, **characterized in that** a plurality of projections (27) is arranged on the spacer element (15) in the area of the boundary margin (19) to accommodate the filter element (16) and/or an intermediate element (22) in a centralising manner.

17. Device according to one or more of the Claims 1 to 16, **characterized in that** the spacer element (15) consists of a plastics construction material that is capable of being injection moulded.

## Revendications

1. Dispositif (10) de filtrage et de séparation de fluides en mouvement (14) par pervaporation, microfiltration, ultrafiltration et osmose inverse, comprenant un canal d'entrée (11) pour le fluide à séparer (14) ainsi que des orifices de sortie (12, 13) pour le rétentat et le perméat et plusieurs éléments d'écartement (15) permettant de guider les fluides en mouvement (14), selon lequel un élément filtrant (16), conçu comme une cellule à membrane et entouré des deux côtés parle fluide en mouvement (14), est inséré entre deux éléments d'écartement (15) ayant en substance une forme de disque, constituant une chambre séparatrice et entourés par le fluide en mouvement (14) et selon lequel, au moins un canal d'écoulement (17), situé en bordure de l'élément d'écartement (15), est destiné au fluide en mouvement, **caractérisé** et dans lequel le canal d'écoulement (17) est constitué par une bordure de délimitation (19) externe rotative et par une corde imaginaire (20) reliant la bordure de délimitation (19), **caractérisé en ce que**, pour l'essentiel, au moins un canal (18) est situé transversalement au canal d'écoulement (17) sur au moins une surface (150, 151) de l'élément d'écartement (15) et **en ce que** le canal (18) est pour l'essentiel parallèle à la corde (20).

2. Dispositif selon la revendication 1, **caractérisé en ce que** la longueur de la corde (200) par rapport à un point central imaginaire (21) de l'élément d'écartement (15) est supérieure à 60°.

3. Dispositif selon l'une ou les deux revendications 1 et 2, **caractérisé en ce qu'**un élément intermédiaire (22) perméable au fluide est situé entre l'élément filtrant (16) et l'élément d'écartement (15).

4. Dispositif selon une ou plusieurs des revendications 1 à 3, **caractérisé en ce qu'**un grand nombre de saillies (23), éloignées par rapport à la surface (150, 151) sont placées sur au moins une surface (150,151) de l'élément d'écartement (15).

5. Dispositif selon la revendication 4, **caractérisé en ce que** les saillies (23) sont disposées sensiblement selon un angle de 45° par rapport au sens du courant (140) du fluide en mouvement (14) qui circule sur toute la surface (150, 151) de l'élément d'écartement (15), la longueur (230) des saillies (23) étant calculée de telle sorte que ces dernières ne sont pas contiguës afin de créer entre elles (23) un passage pour le fluide (24).

6. Dispositif selon la revendication 4, **caractérisé en ce que** les saillies (23) ont un écoulement sensiblement semi-circulaire par rapport à un point central imaginaire (21) de l'élément d'écartement (15), les saillies (23) conduisant sensibiment d'un canal d'écoulement (17) au canal d'écoulement (17) opposé ou à la partie opposée de l'élément d'écartement.

7. Dispositif selon la revendication 6, **caractérisé en ce que** les saillies (23) ont un écoulement discontinu.

8. Dispositif selon une ou plusieurs des revendications 5 à 7, **caractérisé en ce que** autant les saillies (23) ayant un angle de 45° que les saillies (23) semi-circulaires se trouvent sur au moins une surface (150, 151) de l'élément d'écartement (15).

9. Dispositif selon une où plusieurs des revendications 4 à 8, **caractérisé en ce que** la hauteur des saillies (23) est calculée de telle sorte que ces dernières ne touchent pas l'élément filtrant (16) qui se trouve entre deux éléments d'écartement (15).

10. Dispositif selon une ou plusieurs des revendications 1 à 9, **caractérisé en ce que** le canal d'écoulement (17) présente au moins un étai (25) allant de la corde (20) à la bordure de délimitation (19) externe.

11. Dispositif selon -une ou plusieurs des revendications 1 à 10, **caractérisé en ce que** l'arête avant (171) du canal d'écoulement (17) est transversale à la bordure de délimitation (19) et va en s'amincissant vers cette dernière.

12. Dispositif selon une ou plusieurs des revendications 1 à 11, **caractérisé en ce que** les canaux (18) présentent une section transversale qui augmente à mesure qu'ils se rapprochent de la bordure de délimitation (19).

13. Dispositif selon une ou plusieurs des revendications 1 à 12, **caractérisé en ce que** la bordure de délimitation (19) externe présente, dans le sens axial (26) de l'élément d'écartement (15), une épaisseur (190) telle que deux éléments d'écartements (15) situés l'un à côté de l'autre peuvent entourer l'élément filtrant (16) sans le toucher.

14. Dispositif selon la revendication 13, **caractérisé en ce que** la bordure de délimitation (19) présente une rainure (191) entourant circulairement l'élément d'écartement (15) afin d'accueillir une garniture d'étanchéité (192).

15. Dispositif selon la revendication 14, **caractérisé en ce que** la garniture d'étanchéité (192) est composée d'un joint torique.

16. Dispositif selon une ou plusieurs des revendications 1 à, 15, **caractérisé en ce qu'**un grand nombre de saillies (27) est placé sur l'élément d'écartement (15) situé à proximité de la bordure de délimitation (19) afin d'accueillir de façon centrée l'élément filtrant (16) et/ou un élément intermédiaire (22).

17. Dispositif selon une ou plusieurs des revendications 1 à 16, **caractérisé en ce que** l'élément d'écartement (15) est composé d'un matériau synthétique moulable par injection sous pression.
